Europäisches Patentamt

European Patent Office

Office européen des brevets

(19)

(11) **EP 0 792 678 B1**

(12) **FASCICULE DE BREVET EUROPEEN**

(45) Date de publication et mention
de la délivrance du brevet:
**10.09.2003 Bulletin 2003/37**

(51) Int Cl.⁷: **B01D 53/22**

(21) Numéro de dépôt: **97400392.3**

(22) Date de dépôt: **21.02.1997**

(54) **Procédé et installation de séparation d'air par perméation, pour la production d'azote**

Verfahren und Vorrichtung zur Lufttrennung mittels Permeation, zur Erzeugung von Stickstoff

Process and installation to separate air by permeation, for the production of nitrogen

(84) Etats contractants désignés:
**BE DE ES IT NL**

(30) Priorité: **28.02.1996 FR 9602449**

(43) Date de publication de la demande:
**03.09.1997 Bulletin 1997/36**

(73) Titulaire: **L'air Liquide, S.A. à Directoire et Conseil
de Surveillance pour l'Etude et l'Exploitation des
Procédés Georges Claude
75321 Paris Cedex 07 (FR)**

(72) Inventeur: **Barry, Lionel
94220 Charenton le Pont (FR)**

(74) Mandataire: **Le Moenner, Gabriel et al
Societé l'Air Liquide
Service Brevets et Marques
75, Quai d'Orsay
75321 Paris Cédex 07 (FR)**

(56) Documents cités:
**EP-A- 0 075 431          EP-A- 0 520 863
EP-A- 0 588 705          EP-A- 0 655 272
EP-A- 0 659 464          US-A- 4 787 919**

**Description**

La présente invention est relative à un procédé de séparation d'air par perméation, pour la production d'azote, du type dans lequel on comprime de l'air, éventuellement complété par un gaz recyclé provenant de l'étape de perméation, on le réfrigère, on l'épure, et on introduit l'air épuré dans un perméateur, la température de l'air entrant dans le perméateur étant réglée à une valeur TS au moins égale à la température TA du fluide de réfrigération final de l'air comprimé augmentée d'un écart de température prédéterminé ΔT.

Les membranes semi-perméables permettent d'effectuer la séparation de nombreux mélanges gazeux. La perméation se produit sous l'effet d'une différence de pression partielle de part et d'autre des membranes. Le perméat, c'est-à-dire les gaz qui traversent la membrane, est enrichi en composants les plus perméables, et le résidu (ou rétentat) en composants les moins perméables.

Les propriétés de séparation des membranes dépendent fortement de la température. Dans leur domaine usuel de fonctionnement, la plupart des membranes suivent une loi de type Arrhénius. Par exemple, dans le cas d'une séparation binaire :

$$Perm_A = Perm_{AO} . exp \frac{- E_a (A)}{RT} \qquad (1)$$

$$Perm_B = Perm_{BO} . exp \frac{- E_a (B)}{RT} \qquad (2)$$

| | |
|---|---|
| $Perm_A$ : | perméabilité du composant A (vitesse de perméation de A pour une différence de pression partielle unitaire en composant A) |
| $Perm_B$ : | perméabilité du composant B |
| $Perm_{AO}$, $Perm_{BO}$ : | constantes |
| $E_a(A)$,$E_a(B)$ : | énergies d'activation (constantes) |
| T : | température absolue |
| R : | constante des gaz parfaits |

La sélectivité, définie par le rapport des perméabilités $\frac{Perm_A}{Perm_B}$ (si $Perm_A$>$Perm_B$), constitue une mesure de l'efficacité de la séparation. Elle dépend de la température :

$$sel = sel_0 . exp \frac{E_a (B) - E_a (A)}{RT} \qquad (3)$$

Dans l'application à la production d'azote à partir d'air atmosphérique, le composant le plus perméable (composant A) est l'oxygène et l'azote (composant B), qui constitue le rétentat de la perméation, peut être récupéré industriellement avec une pureté élevée. Les membranes utilisées sont généralement des membranes polymères. Dans ce qui suit, on se limitera à cette application.

L'argon de l'air se répartit entre le perméat et le rétentat et, étant un gaz inerte, il est le plus souvent accepté en même temps que l'azote. On appelle par suite "pureté de l'azote" la pureté en gaz inertes (azote + argon). Cette pureté peut atteindre industriellement, avec un rendement satisfaisant, une valeur de l'ordre de 99%.

Lorsque la température augmente, les relations (1) et (2) ci-dessus montrent que les perméabilités augmentent, et il en est de même de la productivité des membranes en azote, qui est le débit d'azote produit par unité d'aire de membrane pour une pureté et une pression d'alimentation données. Cependant, cette augmentation du débit nécessite une augmentation du débit d'air entrant.

En revanche, d'après la relation (3), comme $E_a (O_2)$ <$E_a (N_2)$, la sélectivité diminue, et il en est de même du rendement en azote, qui est le rapport du débit de rétentat au débit d'air d'alimentation, à pureté constante.

Ainsi, le choix de la température de séparation constitue un compromis entre productivité et rendement de séparation. Il dépend de la sélectivité, des énergies d'activation, du rapport coût surfacique sur perméabilité en oxygène de la membrane (et plus généralement de l'investissement), du taux d'utilisation de l'unité de séparation, et du coût de l'énergie.

EP 0 588 705, EP 0 520 863, EP 0 075 431 et EP 0 659 464 décrivent un procédé de production d'azote mettant en oeuvre des membranes avec contrôle de la température du mélange de gaz à l'entrée du séparateur.

US 4,787,919 décrit un procédé de séparation de gaz par perméation comprenant le préchauffage du mélange initial pour empêcher la condensation d'eau sur les membranes.

EP 0 655 272 décrit un procédé de séparation de l'azote de l'air au moyen de membranes semi-perméables engendrant une réduction de la surface active de membrane.

Pour les puretés courantes, inférieures ou égales à 93%, la sélectivité n'est pas un paramètre critique, et il est préférable de travailler à température relativement élevée. Au contraire, lorsqu'on recherche des hautes puretés de l'ordre de 99%, il est économiquement intéressant de réduire la température de l'air traité.

Pour abaisser cette température, le plus économique consiste à utiliser un réfrigérant à air, ou à eau éventuellement réfrigérée, en sortie du compresseur d'air. On atteint ainsi une température de l'ordre de TA + 2°C, ou TA est la température du ou du dernier fluide de refroidissement utilisé dans le réfrigérant.

Cependant, pour éviter tout risque de présence d'eau liquide dans le perméateur, ce qui perturberait son fonctionnement en réduisant son aire utile, il est nécessaire de réchauffer de quelques degrés l'air après filtration de l'eau et de l'huile, pour faire passer son humidité relative de 100% à moins de 80%. c'est ce qu'on appelle la désaturation de l'air avant perméation.

Par suite, la température de séparation TS doit toujours être au moins égale à TA + $\Delta$T, ou $\Delta$T est un intervalle prédéterminé, que l'on choisit souvent au moins égal à 5°C.

Dans un souci de simplicité, la technique habituelle consiste à travailler à une température TS constante, supérieure par exemple de 5°C à la température maximale prévisible du dernier fluide de refroidissement précité. Typiquement, on choisit TS = 40°C environ pour un compresseur muni d'un aéro-réfrigérant final et fonctionnant à température ambiante maximale de 35°C.

Or, comme indiqué plus haut, une telle température TS ne correspond presque jamais, au cours de l'utilisation de l'installation, à l'optimum économique lorsqu'on produit de l'azote à pureté élevée.

L'invention a donc pour but d'améliorer l'économie de la production d'azote à haute pureté.

A cet effet, l'invention a pour objet un procédé du type précité, caractérisé en ce que :

(a) pour les valeurs de la température TA au plus égales à un premier seuil TA1, on règle la température TS à la valeur constante TS1 = TA1 + $\Delta$T;

(b) pour les valeurs de la température TA comprises entre TA1 et une deuxième valeur TA2 supérieure à TA1, on règle la température TS à une valeur telle que TS - TA $\geq$ $\Delta$T.

Le procédé suivant l'invention peut comporter une ou plusieurs des caractéristiques suivantes :

- la valeur de TS est une valeur TS2 constante pour tout l'intervalle TA1, TA2 de la température TA;
- pour les valeurs de la température TA au plus égales à TA1, on utilise une première aire de perméation A1, tandis que, pour les valeurs de la température TA comprises entre TA1 et TA2, on réduit l'aire de perméation à une deuxième valeur A2 inférieure à A1;
- pour les valeurs de la température TA comprises entre TA2 et une valeur TA3 supérieure à TA2, on règle la température TS à une valeur constante TS3 telle que TS3 - TA3 $\geq$ $\Delta$T;
- pour les valeurs de la température TA comprises entre TA2 et une valeur TA3 supérieure à TA2, on réduit de nouveau l'aire de perméation à une troisième valeur A3 inférieure à A2;
- pour un intervalle de valeurs de la température TA supérieures à TA1, on règle TS à une valeur variable TA + $\Delta$T;
- les valeurs de TA1 et $\Delta$T sont respectivement environ 25°C et environ 5°C.

L'invention a également pour objet une installation de production d'azote destinée à la mise en oeuvre du procédé défini ci-dessus.

Cette installation, du type comprenant, montés en série, un compresseur d'air, un réfrigérant à air ou à eau, une unité de filtration d'eau et d'huile, un réchauffeur d'air, et un perméateur, est caractérisée en ce que le réchauffeur d'air est muni de moyens de réglage de la température TS de l'air entrant dans le perméateur en fonction de la température TA du fluide de réfrigération final du réfrigérant.

Suivant d'autres caractéristiques de cette installation :

- le réchauffeur d'air comporte un passage de fluide calorigène et un by-pass réglable pour ce passage;
- le perméateur comporte au moins deux ensembles de perméation, l'un au moins de ces ensembles étant muni de moyens de mise hors service.

Des exemples de mise en oeuvre de l'invention vont maintenant être décrits en regard du dessin annexé, sur lequel :

- la Figure 1 représente schématiquement une installation de production d'azote conforme à l'invention; et

-    la Figure 2 est un diagramme comparatif d'illustration de l'invention.

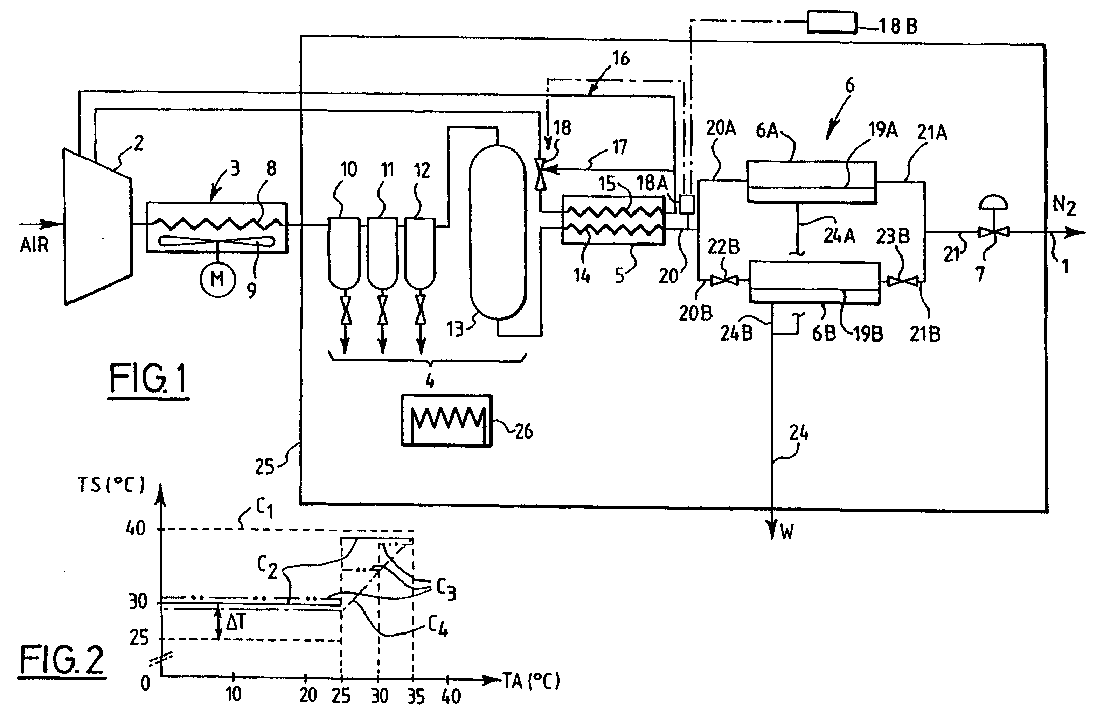

L'installation représentée à la Figure 1 est destinée à produire, dans une conduite de sortie 1, de l'azote ayant une pureté de 99% (pureté en azote + argon), sous une pression sensiblement constante sur toute la gamme de températures ambiantes acceptables pour le compresseur d'air 2, à savoir jusqu'à environ 35°C. L'installation comporte successivement, en aval du compresseur 2, un aéro-réfrigérant 3, une unité de filtration d'eau et d'huile 4, un réchauffeur d'air 5, un perméateur 6 et une vanne de régulation de débit 7.

Le réfrigérant 3 comporte une calandre traversée par un serpentin 8 de circulation de l'air comprimé en 2. Dans cette calandre est disposé un ventilateur 9, qui souffle de l'air atmosphérique sur le serpentin 8.

L'unité de filtration comprend successivement un cyclone 10 d'élimination des plus grosses gouttes de liquide, puis un filtre à coalescence grossier 11 et un filtre à coalescence fin 12, ces deux filtres servant à éliminer les gouttelettes résiduelles, et enfin une tour à charbon 13 qui sert à éliminer les vapeurs d'huile.

Le réchauffeur d'air 5 est un échangeur de chaleur indirect à contre-courant qui comprend des passages 14 pour l'air filtré, et des passages 15 pour la circulation à contre-courant de l'huile de lubrification et de refroidissement du compresseur. Le circuit d'huile 16 comporte de plus un by-pass 17 aux bornes de l'échangeur, le débit circulant dans ce by-pass étant réglé au moyen d'une vanne à trois voies 18 commandée par une sonde 18A de la température de l'air entrant dans le perméateur. La sonde 18A affiche une température de consigne qui est définie par une sonde 18B de la température ambiante.

Le perméateur 6 est constitué de deux ensembles de perméation séparés 6A et 6B montés en parallèle et dont les membranes sont schématisées en 19A et 19B respectivement. En pratique, chaque ensemble 6A, 6B comprend un ou plusieurs modules de perméation dont chacun renferme un faisceau de membranes tubulaires, l'air à séparer étant introduit à l'intérieur de ces tubes. Dans le cas où un ensemble 6A ou 6B comporte plusieurs modules, ceux-ci peuvent être agencés de différentes manières, comme il est bien connu dans la technique.

La conduite 20 qui véhicule l'air sortant de l'échangeur 5 se divise en deux branches 20A, 20B conduisant à l'entrée des deux ensembles 6A, 6B respectivement. L'azote produit (rétentat) en sort via des conduites 21A, 21B, qui se réunissent en une conduite unique 21. Cette dernière, en aval de la vanne 7, forme la conduite de production 1. Les conduites 20B et 21B sont chacune équipées d'une vanne d'isolation, 22B et 23B respectivement. Les perméats des deux ensembles, constitués par de l'air enrichi en oxygène, sont évacués, en tant que résiduaire W de l'installation, via deux conduites 24A, 24B qui se réunissent en une conduite unique 24.

Les éléments 4 à 7 sont disposés dans une enceinte 25 thermostatée au moyen d'un dispositif de chauffage 26, lequel est commandé par la sonde 18B d'une manière décrite dans le EP-A-0 588 705 de la Demanderesse. Ceci permet de maintenir au moins à peu près en température les membranes pendant les arrêts de l'installation.

L'installation ainsi décrite fonctionne de la manière suivante.

Lorsque la température ambiante est inférieure ou égale à 25°C, les vannes 22B et 23B sont ouvertes, de sorte que toute l'aire de perméation des deux ensembles 6A et 6B est utilisée. Le réchauffeur 5 est régulé pour fournir en 20 de l'air à 25 + 5 = 30°C.

Lorsque la température ambiante dépasse 25°C, on ferme les vannes 22B et 23B et, simultanément, la sonde 18A fait passer le point de consigne du réchauffeur 5 à 40°C. Inversement, lorsque la température ambiante redescend au-dessous de 25°C, on ouvre de nouveau les vannes 22B et 23B et, simultanément, la sonde 18A ramène le point de consigne du réchauffeur 5 à 30°C.

De cette manière, pour les températures ambiantes élevées, la pression de l'azote produit peut être maintenue sensiblement constante, grâce à l'adaptation du besoin en air du perméateur à la capacité du compresseur.

Sur la Figure 2, on a illustré en pointillés (courbe C1) le procédé classique évoqué plus haut, dans lequel la température de séparation TS est constante et égale à 40°C pour toute la gamme des températures ambiantes inférieures ou égales à 35°C, et en traits pleins (courbe C2) le procédé décrit ci-dessus, dans lequel TS est égal à 30°C pour TA ≤ 25°C et à 40°C pour TA compris entre 25 et 35°C.

La vanne 7 permet d'assurer le maintien d'une pureté constante de l'azote, par l'une ou l'autre des méthodes suivantes.

Dans une première méthode, un analyseur (non représenté) mesure la teneur en oxygène du gaz véhiculé par la conduite 21 et, en fonction des mesures, commande l'ouverture plus ou moins grande de la vanne 7. Plus précisément, si la pureté de l'azote descend au-dessous d'un seuil prédéterminé, l'analyseur provoque une réduction de l'ouverture de la vanne, et inversement.

Dans une deuxième méthode, la vanne 7 est agencée en régulateur de débit, c'est-à-dire qu'elle est couplée à un étranglement, disposé en amont dans la conduite 21, qui en commande l'ouverture. Le débit ainsi régulé correspond à une valeur de consigne qui est affichée en fonction de la température de séparation TS, et qui peut donc être commandée par la sonde 18A. La loi de variation du débit permettant de conserver une pureté constante de l'azote produit est déterminée à partir des paramètres du perméateur.

Le procédé décrit ci-dessus peut être modifié comme suit.

En pratique, les effets sur le perméateur d'un changement de la température de chauffage en 5 n'apparaissent qu'après une dizaine de minutes, et la stabilisation n'intervient qu'au bout de 30 minutes à 1 heure, temps nécessaire pour que les membranes se mettent à la nouvelle température de séparation.

Par suite, lors d'un changement de la valeur de TS, on peut ne modifier l'aire de perméation, par manoeuvre des vannes 22B et 23B, qu'après un temps prédéterminé, ou bien, en variante, que lorsque la pression en sortie s'est modifiée d'une quantité prédéterminée.

Une autre modification du procédé consiste à introduire une hystérésis lors des changements de la température TS. Ainsi, dans l'exemple décrit plus haut, on fait passer TS de 30 à 40°C lorsque la température ambiante dépasse 26°C, et on ramène TS de 40 à 30°C lorsque la température ambiante descend au-dessous de 24°C.

En variante encore, pour affiner l'adaptation du perméateur au comportement du compresseur d'air, on peut subdiviser le perméateur en trois ensembles de perméation et utiliser deux seuils de température ambiante et trois valeurs de TS. Bien entendu, le nombre d'ensembles de perméation peut également être supérieur à trois.

Par exemple, pour TA ≤ 25°C, TS = 30°C et les trois ensembles de perméation sont en service. Pour 25°C<TA≤30°C, TS = 35°C et deux ensembles seulement sont en service. Et pour 30°C<TA≤35°C, TS = 40°C et un seul ensemble est en service. Ceci est illustré en traits mixtes à deux points sur la Figure 2 (courbe C3).

Bien entendu, dans de telles variantes, l'installation est rendue plus complexe.

Si on veut utiliser un perméateur classique à aire de perméation constante, une autre manière de maintenir le taux d'humidité relatif de l'air au-dessous de 80% lors d'une augmentation de la température ambiante consiste, pour toutes les valeurs de TA supérieures à un certain seuil, par exemple de 25°C, à choisir TS = TA + 5°C, et à laisser la pression de sortie s'adapter de façon correspondante, c'est-à-dire baisser lorsque TA augmente. Cette manière de procéder peut convenir dans les nombreux cas où l'utilisation de l'azote s'effectue constamment à une pression nettement inférieure à la pression de sortie correspondant à TS = 40°C.

Un tel mode de mise en oeuvre est illustré en traits mixtes à un point sur la Figure 2 (courbe C4).

A titre d'exemple numérique, on utilise une installation comprenant un compresseur 2 du type à vis lubrifié, fournissant 13 bars relatifs. Les ensembles 6A et 6B possèdent respectivement des aires de perméation de 2210 m$^2$ et de 520 m$^2$. La pureté de l'azote produit est maintenue à 99% au moyen d'un analyseur d'oxygène, et le débit nominal d'azote pour TA = 20°C est choisi comme base 100.

Le tableau ci-dessous fournit les débits et pressions d'azote (en bars relatifs) pour diverses températures ambiantes, pour les deux modes de mise en oeuvre principaux du procédé de l'invention décrits plus haut.

| Débits d'une unité à 99% à température TA variable | | | | | |
|---|---|---|---|---|---|
| Température ambiante (°C) | | 20 | 25 | 30 | 35 |
| TS = 30°C/40°C | Débit | 100 | 97 | 88 | 86 |
| Aire variable | Pression | 10,4 | 10,2 | 10,3 | 10,0 |
| TS = 30°C/TA+5°C | Débit | 100 | 97 | 90 | 82 |
| Aire constante | Pression | 10,4 | 10,2 | 8,7 | 7,5 |

Il est à noter que le procédé de l'invention peut également être intéressant pour produire de l'azote à pureté courante (≤93%) dans les climats chauds. En effet, on peut alors faire fonctionner les membranes dans des conditions de longévité améliorée, à température réduite, pendant la majeure partie du temps.

En variante encore, le fluide réfrigérant utilisé en 3 peut être de l'eau, éventuellement réfrigérée par un circuit annexe. Dans ce cas, la température TA précitée est la température d'entrée de l'eau dans l'échangeur, et la sonde 18B capte cette température pour commander la sonde 18A et le thermostat 26.

Dans le procédé suivant l'invention, il est bien entendu possible, comme connu en soi, de recycler à l'entrée du compresseur 2 une fraction du perméat issu du perméateur 6.

**Revendications**

**1.** Procédé de séparation d'air par perméation, pour la production d'azote, du type dans lequel on comprime de l'air, éventuellement complété par un gaz recyclé provenant de l'étape de perméation, on le réfrigère, on l'épure, on le réchauffe, pour faire passer son humidité relative de 100 % à moins de 80 % et on introduit l'air épuré dans un perméateur (6), la température de l'air entrant dans le perméateur étant réglée à une valeur TS au moins égale à la température TA du fluide de réfrigération final de l'air comprimé augmentée d'un écart de température prédéterminé ΔT, **caractérisé en ce que**, soit :

(a) pour les valeurs de la température TA au plus égales à un premier seuil TA1, on règle la température TS à la valeur constante TS1 = TA1 + $\Delta$T ; soit :

(b) pour les valeurs de la température TA comprises entre TA1 et une deuxième valeur TA2 supérieure à TA1, on règle la température TS à une valeur telle que TS - TA $\geq \Delta$T,

**2.** Procédé suivant la revendication 1, **caractérisé en ce que** la valeur de TS est une valeur TS2 constante pour tout l'intervalle TA1, TA2 de la température TA.

**3.** Procédé suivant la revendication 1 ou 2, **caractérisé en ce que** pour les valeurs de la température TA au plus égales à TA1, on utilise une première aire de perméation A1 tandis que, pour les valeurs de la température TA comprises entre TA1 et TA2, on réduit l'aire de perméation à une deuxième valeur A2 inférieure à A1.

**4.** Procédé suivant l'une quelconque des revendications 1 à 3, **caractérisé en ce que** pour les valeurs de la température TA comprises entre TA2 et une valeur TA3 supérieure à TA2, on règle la température TS à une valeur constante TS3 telle que TS3 - TA3 $\geq \Delta$T.

**5.** Procédé suivant la revendication 3, **caractérisé en ce que** pour les valeurs de la température TA comprises entre TA2 et une valeur TA3 supérieure à TA2, on réduit de nouveau l'aire de perméation à une troisième valeur A3 inférieure à A2.

**6.** Procédé suivant l'une quelconque des revendications 1 à 5, **caractérisé en ce que**, pour un intervalle de valeurs de la température TA supérieures à TA, on règle TS à une valeur TA + $\Delta$T.

**7.** Procédé suivant l'une quelconque des revendications 1 à 6, **caractérisé en ce que**, les valeurs de TA1 et $\Delta$T sont respectivement environ 25°C et environ 5°C.

**8.** Installation de séparation d'air par perméation, destinée à mettre en oeuvre le procédé selon l'une des revendications 1 à 7, pour la production d'azote, du type comprenant, montés en série, un compresseur d'air (2), un réfrigérant (3) à air ou à eau et, dans une enceinte thermostatée (25), une unité (4) de filtration d'eau et d'huile, un réchauffeur d'air (5), et un perméateur (6), **caractérisé en ce que** le réchauffeur d'air (5) est muni de moyens (18A, 18B) de réglage de la température TS de l'air entrant dans le perméateur (6) en fonction de la température TA du fluide de réfrigération final du réfrigérant (3.

**9.** Installation selon la revendication 8, **caractérisée en ce que** le réchauffeur d'air (5) comporte un passage (15) de fluide calorigène et un by-pass réglable (15) pour ce passage.

**10.** Installation suivant la revendication 8 ou 9, **caractérisée en ce que** le perméateur (6) comporte au moins deux ensembles de perméation (6A, 6B), l'un au moins (6B) de ces ensembles étant muni de moyens de mise hors service (22B, 23B).

**Patentansprüche**

**1.** Verfahren zur permeativen Luftzerlegung zur Produktion von Stickstoff, bei dem man gegebenenfalls durch ein recyliertes Gas aus dem Permeationsschritt ergänzte Luft verdichtet, abkühlt, reinigt und zur Herabsetzung ihrer relativen Feuchte von 100% auf weniger als 80% wieder anwärmt und die gereinigte Luft einem Permeator (6) zuführt, wobei die Temperatur der in den Permeator eintretenden Luft auf einen Wert TS eingestellt wird, der mindestens gleich der um eine vorbestimmte Temperaturdifferenz $\Delta$T erhöhten Temperatur TA des Endkühlfluids für die verdichtete Luft ist, **dadurch gekennzeichnet, daß** man entweder:

(a) für Werte der Temperatur TA, die höchstens gleich einem ersten Schwellenwert TA1 sind, die Temperatur TS auf den konstanten Wert TS1 = TA1 + $\Delta$T einstellt; oder:

(b) für Werte der Temperatur TA, die zwischen TA1 und einem zweiten, über TA1 liegenden Schwellenwert TA2 liegen, die Temperatur TS auf einen solchen Wert einstellt, daß TS - TA $\geq \Delta$T.

**2.** Verfahren nach Anspruch 1, **dadurch gekennzeichnet, daß** es sich bei dem Wert von TS um einen für jedes Intervall TA1, TA2 der Temperatur TA konstanten Wert TS2 handelt.

3. Verfahren nach Anspruch 1 oder 2, **dadurch gekennzeichnet, daß** man für die Werte der Temperatur TA, die höchstens gleich TA1 sind, eine erste Permeationsfläche A1 verwendet, während man für die Werte der Temperatur TA, die zwischen TA1 und TA2 liegen, die Permeationsfläche auf einen zweiten, unter A1 liegenden Wert A2 verringert.

4. Verfahren nach einem der Ansprüche 1 bis 3, **dadurch gekennzeichnet, daß** man für die Werte der Temperatur TA, die zwischen TA2 und einem darüber liegenden Wert TA3 liegen, die Temperatur TS auf einen solchen konstanten Wert TS3 einstellt, daß TS3 - TA3 $\geq \Delta$T.

5. Verfahren nach Anspruch 3, bei dem man für die Werte der Temperatur TA, die zwischen TA2 und einem darüber liegenden Wert TA3 liegen, die Permeationsfläche erneut auf einen dritten, unter A2 liegenden Wert A3 verringert.

6. Verfahren nach einem der Ansprüche 1 bis 5, **dadurch gekennzeichnet, daß** man für ein Intervall von über TA1 liegenden Werten der Temperatur TA die Temperatur TS auf einen Wert von TA + $\Delta$T einstellt.

7. Verfahren nach einem der Ansprüche 1 bis 6, **dadurch gekennzeichnet, daß** die Werte von TA1 und $\Delta$T etwa 25°C bzw. etwa 5°C betragen.

8. Vorrichtung zur permeativen Luftzerlegung, die zur Durchführung des Verfahrens nach einem der Ansprüche 1 bis 7 ausgelegt ist, zur Produktion von Stickstoff, enthaltend hintereinander einen Luftverdichter (2), einen Luft- oder Wasserkühler (3) und in einem thermostatisierten Behältnis (25) eine Wasser- und Ölfiltrationseinheit (4), einen Lufterwärmer (5) und einen Permeator (6), **dadurch gekennzeichnet, daß** der Lufterwärmer (5) mit Mitteln (18A, 18B) zur Einstellung der Temperatur TS der in den Permeator (6) eintretenden Luft in Abhängigkeit von der Temperatur TA des Endkühlfluids des Kühlers (3) ausgestattet ist.

9. Vorrichtung nach Anspruch 8, **dadurch gekennzeichnet, daß** der Lufterwärmer (5) einen Durchgang (15) für Wärmeträgerfluid und eine regulierbare Umgehung (17) für diesen Durchgang enthält.

10. Vorrichtung nach Anspruch 8 oder 9, **dadurch gekennzeichnet, daß** der Permeator (6) mindestens zwei Permeationsbaugruppen (6A, 6B) enthält, wobei mindestens eine (6B) dieser Baugruppen mit Abschalteinrichtungen (22B, 23B) ausgestattet ist.

**Claims**

1. Process for separating air by permeation, for the production of nitrogen, of the type in which air, optionally supplemented with a recycled gas coming from the permeation step, is compressed, chilled, purified and warmed, in order to change its relative humidity from 100% to less than 80%, and the purified air is introduced into a permeator (6), the temperature of the air entering the permeator being set at a value TS at least equal to the temperature TA of the final fluid for chilling the compressed air plus a predetermined temperature difference $\Delta$T, **characterized in that** either:

   (a) for values of the temperature TA of at most equal to a first threshold TA1, the temperature TS is set to the constant value TS1 = TA1 + $\Delta$T; or:
   (b) for values of the temperature TA between TA1 and a second value TA2 greater than TA1, the temperature TS is set to a value such that TS - TA $\geq \Delta$T.

2. Process according to Claim 1, **characterized in that** the value of TS is a value TS2 constant over the entire TA1, TA2 range of the temperature TA.

3. Process according to Claim 1 or 2, **characterized in that**, for values of the temperature TA at most equal to TA1, a first permeation area A1 is used whereas, for values of the temperature TA between TA1 and TA2, the permeation area is reduced to a second value A2 smaller than A1.

4. Process according to any one of Claims 1 to 3, **characterized in that**, for values of the temperature TA between TA2 and a value TA3 greater than TA2, the temperature TS is set to a constant value TS3 such that TS3 - TA3 $\geq \Delta$T.

5. Process according to Claim 3, **characterized in that**, for values of the temperature TA between TA2 and a value TA3 greater than TA2, the permeation area is again reduced to a third value A3 smaller than A2.

6. Process according to any one of Claims 1 to 5, **characterized in that**, for a range of values of the temperature TA greater than TA1, TS is set to a value TA + $\Delta$T.

7. Process according to any one of Claims 1 to 6, **characterized in that** the values of TA1 and $\Delta$T are about 25°C and about 5°C, respectively.

8. Plant for separating air by permeation, designed to implement the process according to one of Claims 1 to 7 for producing nitrogen, of the type comprising, connected in series, an air compressor (2), an air or water chiller (3) and, in a thermostatted chamber (25), a water/oil filtration unit (4), an air heater (5) and a permeator (6), **characterized in that** the air heater (5) is provided with means (18A, 18B) for controlling the temperature TS of the air entering the permeator (6) according to the temperature TA of the final chilling fluid of the chiller (3).

9. Plant according to Claim 8, **characterized in that** the air heater (5) has a passage (15) for a heat-generating fluid and an adjustable by-pass (15) for this passage.

10. Plant according to Claim 8 or 9, **characterized in that** the permeator (6) comprises at least two permeation units (6A, 6B), at least one (6B) of these units being provided with means (22B, 23B) for taking it out of service.

EP 0 792 678 B1

FIG.1

AIR

2

3 8

M

9

10 11 12

13

4

26

25

16

18

17

15 18A

14 5

20

20A

22B

20B

6

6A

24A

24B

19A 21A

23B

6B 19B 21B

21

7

N₂

1

18 B

24

W

FIG.2

TS(°C)

C₁

40

C₂

30

ΔT

25

C₃

C₄

0

10 20 25 30 35 40

TA(°C)

9